# EUROPÄISCHE PATENTSCHRIFT

(11) **EP 0 386 467 B1**
(45) Veröffentlichungstag und Bekanntmachung des Hinweises auf die Patenterteilung: **11.01.1995**
(21) Anmeldenummer: 90102148.5
(22) Anmeldetag: 03.02.1990
(51) Int. Cl.: H04N 7/087, H04N 5/782

(54) **Vorrichtung zur sendeseitigen Steuerung eines Empfängers**
Apparatus for controlling a receiver from the transmitter side
Appareil pour la commande d'un récepteur à partir du transmetteur

(30) Priorität: 07.03.1989 DE 3907098
(43) Veröffentlichungstag der Anmeldung: 12.09.1990
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Hegendörfer,Max,Dipl.Ing.,Grundig EMV,Max Grundig, D-8510 Fürth/Bay (DE)
(74) Vertreter: Dreykorn-Lindner, Werner, Dipl.-Ing.

(56) Entgegenhaltungen:
- DE-A- 3 545 910
- DE-C- 3 313 799
- DE-C- 3 424 812

## Beschreibung

Die Erfindung betrifft eine Vorrichtung zur sendeseitigen Steuerung eines Empfängers nach dem Oberbegriff des Patentanspruchs 1.

Um die Vorprogrammierung von Empfängern, insbesondere von Videorecordern, unter Berücksichtigung zeitlicher Verschiebung des betreffenden Programmbeitrags zu vereinfachen ist es bekannt, sendeseitig Zusatzinformationen wie Programmquellenangabe, Wochentag, Anfangszeit und Endzeit zu erzeugen, welche zusammen mit dem Fernsehsignal übertragen werden. Diese programmbegleitenden Zusatzinformationen, auch VPS-Label genannt, ermöglichen einen ereignisgesteuerten Empfang und/oder Aufzeichnung bestimmter Sendungen, wobei es nicht mehr darauf ankommt, wann nach Programmbeginn am Kalendertag und Programmende (VPS-Tag), der Programmbeitrag gesendet wird. Falls jedoch ein Ersatzbeitrag gesendet oder der Programmbeitrag über den VPS-Tag hinaus verschoben wird, wird sendeseitig eine solche Zusatzinformation (Ausfall - Erkennungssignal) erzeugt, daß der im Lauerbetrieb befindliche Empfänger abgeschaltet wird.

Aus der DE-C- 33 13 799 ist eine Einrichtung zum zeit- oder ereignisgesteuerten Auf zeichnen von Fernsehprogrammsignalen bekannt, bei der ein Umschalten von dem ereignisgesteuerten Aufzeichnungsbetrieb auf den zeitgesteuerten Aufzeichnungsbetrieb ermöglicht wird. Wird ein Ersatzbeitrag gesendet und wird diese Programmänderung von aktuellen Programmzeitschriften noch angekündigt, so kann die Umschaltung auf den zeitgesteuerten Aufnahmebetrieb vorgenommen werden, wenn zusammen mit der Zusatzinformation ein sogenanntes Austauschkennungsbit gespeichert ist. Im anderen Fall, d.h. kein Austauschkennungsbit ist gespeichert, unterbleibt bei Empfang des Ausfall-Erkennungssignal die Aufzeichung des Ersatzbeitrags.

Weiterhin ist aus der DE-C- 34 24 812 ein Verfahren zum Übertragen von Programmierungsinformationen für Videoaufzeichnungsgeräte bekannt, bei dem für den zusätzlichen Programmbeitrag sendeseitig eine Zusatzinformation erzeugt wird, welche im Vergleich zur Zusatzinformation des ursprünglichen Programmbeitrags eine geringfügig abweichende Anfangszeit enthält. Durch die Wahl der geringfügig früheren oder späteren Anfangszeit kann sendeseitig der Empfänger derart gesteuert werden, daß der Empfänger seinen Lauerbetrieb beendet oder fortsetzt. Der DE-C- 34 24 812 ist keine Anregung dahingehend zu entnehmen, daß der Lauerbetrieb des Empfängers beendet wird, falls der Programmbeitrag über das Programmende (VPS-Tag) hinaus verschoben wird.

Der Erfindung liegt die Aufgabe zugrunde, eine Vorrichtung zur Steuerung eines Empfängers mit Datendecoder und Speicher derart auszugestalten, daß eine Aktualisierung bereits im Empfänger abgespeicherter Zusatzinformationen ermöglicht wird.

Diese Aufgabe wird bei einer gattungsgemäßen Vorrichtung durch die kennzeichnenden Merkmale des Patentanspruchs 1 gelöst.

Die erfindungsgemäße Vorrichtung weist den Vorteil auf, daß bei einem über das Programmende (VPS-Tag) hinaus verschobenen Programmbeitrag der Empfänger mit Hilfe der weiteren Zusatzinformation umprogrammiert werden kann. Dadurch wird auf überraschend einfache Art und Weise erreicht, daß der Lauerbetrieb beendet und erst am entsprechenden Wochentag wieder aufgenommen wird.

Die Vorrichtung erfordert im Vergleich zu einem Empfänger mit Datendecoder (VPS-Decoder) und Speicher nur einen geringen zusätzlichen Schaltungsaufwand zur Umschaltung und Abspeicherung der empfangenen weiteren Zusatzinformationen bzw. Korrektur der im Empfänger bereits abgespeicherten Zusatzinformationen.

Ist gemäß der Vorrichtung nach Patentanspruch 3 empfangsseitig eine Anzeigeeinrichtung angeordnet, so wird eine vereinfachte Bedienung für den Benutzer bei der Eingabe von Aufzeichnungswünschen erreicht, wenn die Zusatzinformationen in Form von Programmübersichten gesendet werden. Der Benutzer kennzeichnet nur noch den auf der Anzeigeeinrichtung dargestellten Beitrag und danach erfolgt automatisch die Programmierung des Empfängers durch Auswertung und Abspeicherung der Zusatzinformationen. Neben dieser einfachen und fehlerfreien Programmierung weist die Schaltungsanordnung den Vorteil auf, daß der Benutzer sich einen raschen Überblick über die abgespeicherten und durch sendeseitige Steuerung aktualisierten Aufzeichnungswünsche verschaffen kann.

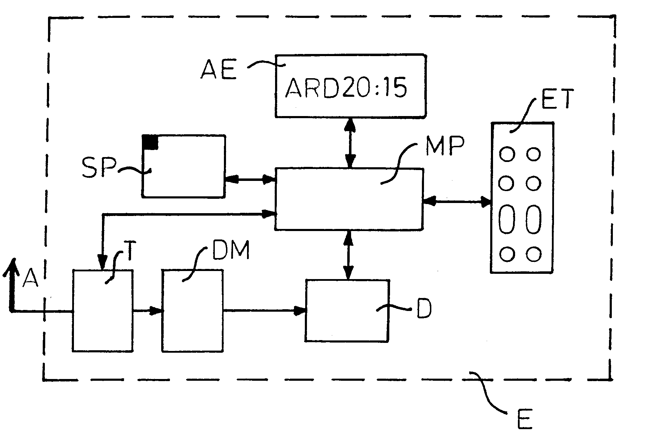

Die Erfindung wird im folgenden anhand einer in der Zeichnung dargestellten Ausführungsform näher beschrieben und erläutert.

Die Figur zeigt einen Empfänger, beispielsweise einen Videorecorder, von dem lediglich die zum Verständnis der Erfindung erforderlichen Komponenten in Form eines Blockschaltbildes dargestellt sind.

Im Empfänger E ist ein Datendecoder D (VPS-Decoder) angeordnet, welcher die zur Empfängersteuerung auf Empfang und/oder Aufzeichnung bestimmter Sendungen dienenden Zusatzinformationen einer Datenzeile (z.B. Zeile 16 bei einem PAL-Fernsehübertragungssystem) während der Vertikalaustastlücke des Fernsehsignals entnimmt und einen mit dem Datendecoder D verbundenen Mikroprozessor MP zuführt. Die Vorprogrammierung des Empfängers E kann durch manuelle Eingabe der Daten an einer Tastatur ET oder durch Betätigung verschiedener Bedienungselemente an einer Fernbedienungseinheit erfolgen.

Werden die Zusatzinformationen nicht nur programmbegleitend, sondern in Form von Programmübersichten gesendet, so kann auf überraschend einfache Art und Weise die Vorprogrammierung vereinfacht werden. Der Benutzer kann mit Hilfe des Mikroprozessors MP die Abstimmung des Tuners T auf einen bestimmten Empfangskanal (Programmquelle) vornehmen. Zur sichtbaren Darstellung der über Antenne A, Tuner T, Demodulator DM und Datendecoder D dem Mikroprozessor MP zugeführten Zusatzinformationen, ist der Mikroprozessor MP mit einer Anzeigeeinrichtung AE verbunden. Bei Empfängern ist in der Regel eine Anzeigeeinrichtung zur Darstellung von Zahlen und alphanumerischen Zeichen ohnehin vorgesehen. Der Benutzer wählt unter den an der Anzeigeeinrichtung AE dargestellten Zusatzinformationen aus und auf Befehl werden die zwischengespeicherten Zusatzinformationen endgültig in den Speicher SP des Empfängers E eingegeben.

Weist die Fernbedienungseinheit eine Anzeigeeinrichtung auf, so kann die Eingabe der Daten in den Speicher SP des Empfängers E in gleicher Weise erfolgen.

Der Mikroprozessor MP vergleicht die abgespeicherten Zusatzinformationen mit den vom Datendecoder D empfangenen aktuellen Zusatzinformationen. Bei einer Verschiebung der Sendung, z.B. um einen VPS-Tag oder mehr, wird sendeseitig eine weitere Zusatzinformation erzeugt und der Mikroprozessor MP nimmt nach Empfang der weiteren Zusatzinformation entweder eine entsprechende Korrektur der bereits gespeicherten Zusatzinformationen vor oder löscht die gespeicherte Zusatzinformation und speichert die neue Zusatzinformation ab.Die neue Zusatzinformation kann auch eine andere Programmquellenangabe enthalten, wofür vorzugsweise ein alphanumerischer Code benutzt wird.

Im Vergleich zu einem Empfänger mit Videotextdecoder ist der Schaltungsaufwand für den VPS-Decoder wesentlich geringer. Mit dem neuen Verfahren wird die Möglichkeit eröffnet, durch sendeseitige Steuerung automatisch die Vorprogrammierung von Empfängern zu aktualisieren, wodurch der Bedienkomfort erheblich erhöht wird. Werden die Zusatzinformationen nicht nur programmbegleitend, sondern in Form von Programmübersichten gesendet, so wird dem Benutzer ein mit Videotext (Fernsehtext) vergleichbarer Bedienkomfort (einfache und fehlerfreie Programmierung) geboten.

## Patentansprüche

1. Vorrichtung zur sendeseitigen Steuerung eines Empfängers, insbesondere eines Videorecorders, auf Empfang und/oder Aufzeichnung bestimmter Sendungen, bei der sendeseitig Zusatzinformationen wie Programmquellenangabe, Wochentag und mindestens die Anfangszeit erzeugt und zusammen mit einem Fernsehsignal übertragen werden, welche im Empfänger speicherbar sind, und bei der im Falle einer zeitlichen Verschiebung der Sendung sendeseitig eine weitere Zusatzinformation mit geringfügig abweichendem künstlichen Anfangszeitpunkt derart erzeugt wird, daß bei einer Verschiebung am VPS-Tag der Empfänger den Lauerbetrieb fortsetzt und bei einer Verschiebung über den VPS-Tag hinaus der Empfänger den Lauerbetrieb beendet,
**dadurch gekennzeichnet,** daß
bei einer Verschiebung der Sendung über den VPS-Tag hinaus, sendeseitig eine weitere Zusatzinformation erzeugt wird, daß im Empfänger (E) ein Mikroprozessor (MP) angeordnet ist, welcher mit einem Speicher (SP) und einem Datendekoder (D) verbunden ist und in an sich bekannter Weise die abgespeicherten Zusatzinformationen mit den vom Datendekoder (D) empfangenen aktuellen Zusatzinformationen vergleicht, und daß der Mikroprozessor (MP) nach Empfang der weiteren Zusatzinformation entweder eine entsprechende Korrektur - zum Beispiel neuer VPS-Tag, aber gleiche Anfangszeit - der bereits gespeicherten Zusatzinformationen vornimmt oder die gespeicherte Zusatzinformation löscht und die neue Zusatzinformation speichert, wodurch nach Empfang der weiteren Zusatzinformation automatisch eine entsprechende Korrektur der im Empfänger bereits gespeicherten Zusatzinformation erfolgt.

2. Vorrichtung nach Anspruch 1,
**dadurch gekennzeichnet**, daß
zumindest für die weitere Zusatzinformation ein alphanumerischer Code benutzt wird.

3. Vorrichtung nach Anspruch 1,
**dadurch gekennzeichnet**, daß
empfangsseitig eine Anzeigeeinrichtung (AE) zur sichtbaren Darstellung der empfangenen und/oder gespeicherten Zusatzinformationen angeordnet ist, welche mit dem Mikroprozessor (MP) verbunden ist und daß der Benutzer unter den an der Anzeigeeinrichtung (AE) dargestellten Zusatzinformationen auswählt und auf Befehl die zwischengespeicherten Zusatzinformationen endgültig in den Speicher (SP) des Empfängers (E) eingibt.

## Claims

1. Device for the transmit-side control of a receiver, in particular of a video recorder, as regards reception and/or recording of certain transmissions, with which supplementary information that is capable of being stored in the receiver, such as indication of programme source, day of the week and at least the starting-time, is generated on the transmit side and transmitted together with a television signal, and with which in the event of a temporal displacement of the transmission additional supplementary information with a slightly differing artificial starting-time is generated on the transmit side in such a way that in the event of a postponement on the VPS day the receiver continues the waiting mode and in the event of a postponement beyond the VPS day the receiver terminates the waiting mode,
characterised in that
in the event of a postponement of the transmission beyond the VPS day additional supplementary information is generated on the transmit side, in the receiver (E) there is arranged a microprocessor (MP) which is connected to a memory (SP) and a data decoder (D) and which in a manner known as such compares the stored supplementary information with the up-to-date supplementary information received by the data decoder (D), and after reception of the additional supplementary information the microprocessor (MP) either undertakes a corresponding correction - for example, a new VPS day but the same starting-time - of the supplementary information already stored or deletes the stored supplementary information and stores the new supplementary information, as a result of which after reception of the additional supplementary information a corresponding correction of the supplementary information already stored in the receiver is effected automatically.

2. Device according to Claim 1,
characterised in that
use is made of an alphanumeric code for the additional supplementary information at least.

3. Device according to Claim 1,
characterised in that
for the visible representation of the received and/or stored supplementary information a display device (AE) is arranged on the receive side which is connected to the microprocessor (MP) and the user makes a selection from the supplementary information represented on the display device (AE) and on command finally enters the supplementary information stored temporarily into the memory (SP) of the receiver (E).

## Revendications

1. Dispositif pour commander, côté émission, un récepteur, notamment un enregistreur vidéo, pour la réception et/ou l'enregistrement d'émissions déterminées, et dans lequel des informations supplémentaires, telles qu'une indication de source d'un programme, le jour de la semaine et au moins l'instant de début d'émission, sont produites coté émission et sont transmises conjointement avec un signal de télévision et peuvent être mémorisées dans le récepteur, et dans lequel, dans le cas d'un décalage temporel de l'émission, une autre information supplémentaire possédant un instant artificiel de démarrage légèrement décalé est produite côté émission de telle sorte que, dans le cas d'un décalage dans le jour VPS, le récepteur continue le fonctionnement d'écoute et, dans le cas d'un décalage au-delà du jour VPS, le récepteur interrompt le fonctionnement d'écoute, caractérisé en ce que, dans le cas d'un décalage de l'émission au-delà du jour VPS, une autre information supplémentaire est produite côté émission, que dans le récepteur (E) est disposé un microprocesseur (MP), qui est relié à une mémoire (SP) et un décodeur de données (D) et compare, de façon connue en soi, les informations supplémentaires mémorisées aux informations supplémentaires actuelles reçues par le décodeur de données (D), et qu'après la réception de l'autre information supplémentaire, le microprocesseur (MP) exécute une correction correspondante - par exemple un nouveau jour VPS, mais un même instant de démarrage - des informations supplémentaires déjà mémorisées ou efface l'information supplémentaire mémorisée et mémorise la nouvelle information supplémentaire, ce qui a pour effet qu'après la réception de l'autre information supplémentaire, une correction correspondante de l'information supplémentaire déjà mémorisée dans le récepteur est exécutée de façon automatique.

2. Dispositif selon la revendication 1, caractérisé en ce qu'un code alphanumérique est utilisé au moins pour l'autre information supplémentaire.

3. Dispositif selon la revendication 1, caractérisé en ce que sur le côté réception est disposé un dispositif d'affichage (AE) servant à donner une représentation visible des informations supplémentaires reçues et/ou mémorisées et qui est relié au microprocesseur (MP), et que l'utilisateur effectue une sélection parmi les informations supplémentaires qui sont représentées sur le dispositif d'affichage (AE) et, sur commande, introduit de façon définitive les informations supplémentaires mémorisées temporairement, dans la mémoire (SP) du récepteur (E).
